Europäisches Patentamt

European Patent Office

Office européen des brevets

(19)

(11) Veröffentlichungsnummer: **0 385 983 B1**

## (12) EUROPÄISCHE PATENTSCHRIFT

(45) Veröffentlichungstag der Patentschrift:
01.07.92 Patentblatt 92/27

(51) Int. Cl.$^5$: **B01D 47/04,** F23J 15/00

(21) Anmeldenummer: 88902120.0

(22) Anmeldetag: 30.01.88

(86) Internationale Anmeldenummer:
PCT/EP88/00066

(87) Internationale Veröffentlichungsnummer:
WO 88/05692 11.08.88 Gazette 88/18

(54) **VORRICHTUNG ZUR NASSREINIGUNG VON RAUCHGAS.**

(30) Priorität: 31.01.87 DE 3702868
07.02.87 DE 3703803

(43) Veröffentlichungstag der Anmeldung:
12.09.90 Patentblatt 90/37

(45) Bekanntmachung des Hinweises auf die
Patenterteilung:
01.07.92 Patentblatt 92/27

(84) Benannte Vertragsstaaten:
AT BE CH DE FR GB IT LI NL SE

(56) Entgegenhaltungen:
DE-A- 1 244 718
DE-A- 3 523 731
FR-A- 663 968
US-A- 4 528 005

(73) Patentinhaber: **Mauerhoff, Wolfgang R.
Am Königsberg 9
W-6239 Eppstein 3 (DE)**

(72) Erfinder: **Mauerhoff, Wolfgang R.
Am Königsberg 9
W-6239 Eppstein 3 (DE)**

(74) Vertreter: **Jochem, Bernd, Dipl.-Wirtsch.-Ing.
Patentanwälte Beyer & Jochem Postfach 17 41
09
W-6000 Frankfurt/Main (DE)**

## Beschreibung

Die Erfindung betrifft eine Vorrichtung zur Naßreinigung von durch einen Rauchgaszug abgeleitetem Rauchgas, bestehend aus einer den Rauchgaszug überdeckenden Haube und einem ihn ringförmig umgebenden, Reinigungsflüssigkeit enthaltenden Becken, wobei der Rand der Haube ringsum ein wenig unter die Oberfläche der einen Schaum bildenden Zusatz enthaltenden Reinigungsflüssigkeit reicht und als Turbulenzeinrichtung ausgebildet ist, welche das Rauchgas auf seinem Strömungsweg mehrfach unter die Oberfläche der Reinigungsflüssigkeit leitet.

Eine derartige Vorrichtung zur Naßreinigung ist in der DE-A-35 23 731 veröffentlicht worden, nachdem es aus der DE-U-74 21 406 bekannt war, am oberen Ende eines Schornsteins eine Vorrichtung zur Naßreinigung anzubringen, die aus mehreren radial angeordneten Lamellen oder Blechen besteht, von denen jeweils zwei Bleche einen im wesentlichen gleichmäßigen, wellenförmigen Rauchkanal bilden, an dessen Wänden ein Wasserfilm herabrinnt. Dabei kommt jedoch ein großer Teil des Gases überhaupt nicht mit der Reinigungsflüssigkeit in Berührung.

Es ist durch die DE-A-26 00 407 weiterhin bekannt, Rauchgas mittels eines Gebläses durch eine in einem Becken enthaltene Reinigungsflüssigkeit hindurchzusaugen, indem das Gas gezwungen wird, um die untere Kante eines in die Reinigungsflüssigkeit reichenden Leitblechs herum zu strömen. Die voluminöse Anlage eignet sich jedoch nicht zur Anbringung auf einem Schornstein. Außerdem ist die Reinigungswirkung unzureichend, da das Rauchgas in verhältnismäßig groben Blasen unter dem einzigen Leitblech durch die Flüssigkeit hindurchströmt.

Bei einer weiteren bekannten Vorrichtung gemäß US-A-3 045 990 wird das Rauchgas überhaupt nicht durch die Reinigungsflüssigkeit hindurch, sondern nur an deren Oberfläche entlang geleitet, so daß ebenfalls ein grober Teil des Gases nicht mit der Reinigungsflüssigkeit in Kontakt kommt.

Schließlich ist eine weitere Vorrichtung zur Naßreinigung von Gas durch die DE-C-11 191 bekannt, welche einen mit der Spitze nach unten in die Reinigungsflüssigkeit eingetauchten Trichter aufweist, der auf der Außenseite eine Vielzahl von zylindrischen Ringen mit Sieblöchern trägt, wobei offen bleibt, in welcher Weise diese Ringe und Sieblöcher zueinander angeordnet sind. Nach.teilig ist dabei, daß das Rauchaas de:. Gegendruck einer Wassersäule in der gesamten Höhe des Trichters überwinden muß, und die Trichterwand die Zwischenräume zwischen den zylindrischen Ringen mit Sieblöchern oben dicht abschließt, so daß die Zwischenräume zwischen den zylindrischen Ringen oben nicht in einen sich mit Schaum füllenden gröberen Raum übergehen, wo eine intensive Reinigung des Rauchgases am erzeugten Schaum stattfinden könnte. Der bei der bekannten Vorrichtung gebildete Schaum wird zum größten Teil zusammen mit dem Rauchgas abgeleitet und geht damit dem Reinigungsbad verloren.

Der Erfindung liegt die Aufgabe zugrunde, eine Vorrichtung der eingangs genannten Art dahingehend zu verbessern, daß das Rauchgas zusätzlich zur Reinigung im Flüssigkeitsbad noch intensiver durch den infolge der Blasenbildung entstandenen Schaum gereinigt wird.

Vorstehende Aufgabe wird erfindungsgemäß dadurch gelöst, daß im Strömungsweg des Rauchgases hinter dem Becken mit Reinigungsflüssingkeit eine Einrichtung zur Schaumzerlegung angeordnet ist, bestehend aus einem Radialgebläse, welches von wenigstens einer Prallwand umgeben ist. Mehrere Prallwände können, zweckmäßig in konischer Ausbildung, übereinander um das Radialgebläse angeordnet sein.

Die Erfindung bietet den Vorteil, daß mit sehr viel Schaum gearbeitet werden kann, daß der Betrieb der Vorrichtung unabhängig ist von Schwankungen der Rauchgasmenge und anderen die Schaumbildung beeinflussenden Zufälligkeiten und daß mit einer einzigen Vorrichtung von bestimmter Größe ein sehr weiter Kapazitätsbereich von Verbrennungsanlagen, z. B. von 30 bis 100 Kwh abgedeckt werden kann.

In bevorzugter praktischer Ausführung der Erfindung wird die Schaumbildung in einer aus mehreren konzentrischen, senkrecht angeordneten Blechen bestehenden Turbulenzeinrichtung, deren Zwischenräume oben durch einen gemeinsamen Hohlraum verbunden sind, dadurch verbessert, daß der Hohlraum radial außerhalb des äußersten Blechs unterhalb von dessen Oberkante, aber über der Oberfläche der Reinigungsflüssigkeit eine Auslaßöffnung hat und das äußerste Blech weiter unter die Oberfläche der Reinigungsflüssigkeit reicht als die benachbarten inneren Bleche. Dadurch wird bewirkt, daß das Rauchgas jedenfalls vor dem radial äußersten Blechring zum Aufsteigen in den mit Schaumbläschen gefüllten gemeinsamen Hohlraum gezwungen ist.

Zweckmäßigerweise ist die Auslaßöffnung des Hohlraums durch ein in die Reinigungsflüssigkeit reichendes Gitter abgedeckt. Durch das Gitter, welches z. B. Gitteröffnungen von etwa 5 bis 10, vorzugsweise etwa 8 mm Weite haben kann, werden größere Schaumblasen verkleinert und der Schaum, mit dem das Rauchgas auf dem weiteren Strömungsweg zu dem genannten Radialgebläse weiter in Berührung bleibt, verdichtet. Zur Schaumverdichtung kann auch die weitere bevorzugte Maßnahme beitragen, daß die Saugseite des Radialgebläses über eine sich in Strömungsrichtung trichterförmig verengende Zuleitung an das Becken angeschlossen ist.

Es hat sich bei praktischen Versuchen weiterhin als zweckmäßig herausgestellt, daß der innere Rand der Haube oder der innerste Blechring der Turbulenzeinrichtung ungefähr ebenso tief unter die Oberfläche der Reinigungsflüssigkeit reichen wie die Unterkante des äußersten Blechs.

Die Schaumbildung hängt auch von der während der Betriebszeit zunehmenden Verschmutzung der Reinigungsflüssigkeit ab. In weiterer bevorzugter Ausgestaltung der Erfindung kann die Verschmutzung durch gelöste Stoffe dadurch verzögert werden, daß Elektroden einer Elektrolyseeinrichtung in die Reinigungsflüssigkeit eingetaucht sind. In dieselbe Richtung zielt auch der weitere Vorschlag, wonach in Verbindung mit einem über eine Pumpe, eine Vorlaufleitung und eine Rücklaufleitung mit dem Becken verbundenen Vorratsbehälter für Reinigungsflüssigkeit, welcher gleichzeitig als Absetzbehälter für Schlamm dient, die Vorlaufleitung am Boden des Beckens mündet und zum Absaugen von Schlamm aus dem Becken die Pumpe in Intervallen mit entgegengesetzter Förderrichtung antreibbar ist. Die Erfindung wird nachstehend anhand eines in der Zeichnung dargestellten Ausführungsbeispiels näher erläutert.

Es zeigen:

Fig. 1 einen senkrechten Längsschnitt durch eine Vorrichtung zur Naßreinigung,

Fig. 2 eine Detailansicht zu Fig. 1 in größerem Maßstab,

Fig. 3 einen senkrechten Längsschnitt durch eine abgeänderte Vorrichtung zur Naßreinigung.

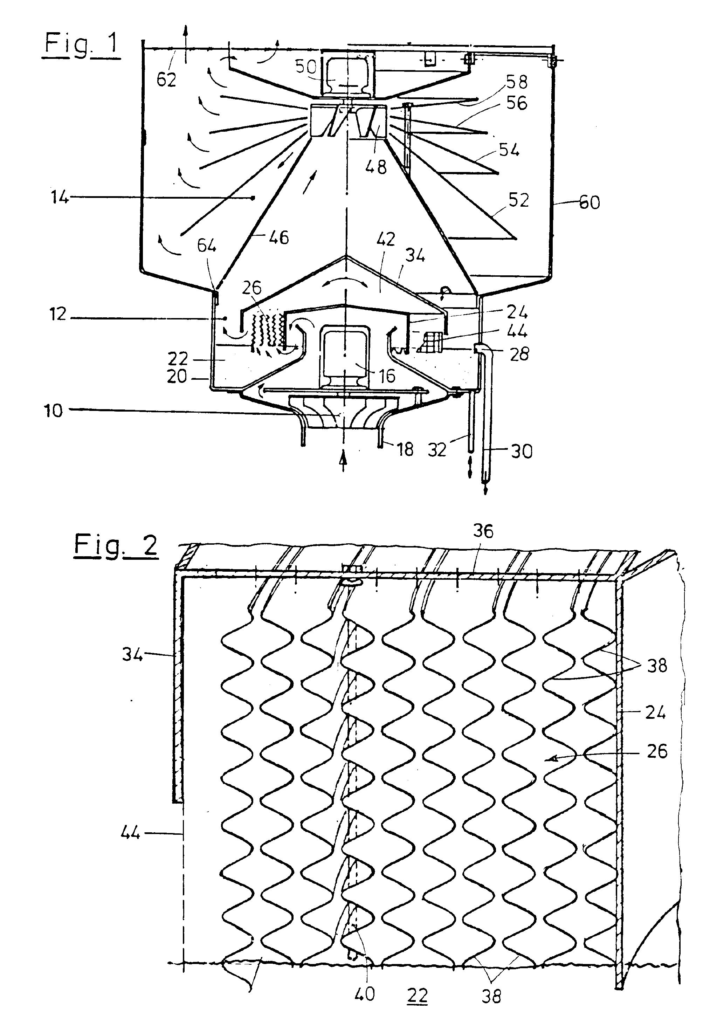

Die in Fig. 1 gezeigte Vorrichtung zur Naßreinigung von Rauchgas besteht aus drei im fertig montierten Zustand fest miteinander verbundenen Baugruppen, nämlich einem Verdichter 10, einem als Schaumerzeuger 12 wirkenden Reinigungsbad und einem Schaumzerleger 14.

Der Verdichter 10 ist im Beispielsfall ein durch einen Motor 16 angetriebener Radialverdichter. Er trägt dazu bei, das Rauchgas aus einem Rauchgaszug 18, z. B. eines Schornsteins, abzusaugen und durch das Reinigungsbad zu drücken. Dabei kann die Förderleistung des Verdichters 10 derart geregelt werden, daß unabhängig von den Witterungsbedingungen und der Windgeschwindigkeit optimale Verbrennungsverhältnisse erzielt werden und außerdem die Förderung des Rauchgases durch das Reinigungsbad gewährleistet ist.

Das Reinigungsbad besteht im wesentlichen aus einem den Rauchgaszug 18 und den Verdichter 10 ringförmig umgebenden Becken 20 mit einer Reinigungsflüssigkeit 22. Mittels nicht gezeigter Stützen ist an dem Becken 20 eine den Rauchgaszug überdeckende Haube 24 abgestützt. Der untere Rand der Haube 24 ist in die Reinigungsflüssigkeit 22 eingetaucht und von einer insgesamt mit 26 bezeichneten Turbulenzeinrichtung umgeben, die ebenfalls in die Reinigungsflüssigkeit 22 eintaucht. Der Flüssigkeitsspiegel der Reinigungsflüssigkeit 22 wird durch eine Überlauföffnung 28 bestimmt, die über eine Rücklaufleitung 30 mit einem nicht gezeigten Sammelbehälter verbunden ist, welcher z. B. im Keller des Gebäudes aufgestellt sein kann. Dort befindet sich auch eine Förderpumpe, die über ein Filter Flüssigkeit aus dem Sammelbehälter ansaugt und im Kreislauf über eine Zuführleitung 32 wieder in das ringförmige Becken 20 fördert. Wenn sich mit der Zeit Schlamm am Boden des Beckens 20 ansammelt, kann dieser von Zeit zu Zeit über die am Boden des Beckens 20 mündende Zuführleitung 32 abgesaugt werden, indem die erwähnte Förderpumpe vorübergehend mit umgekehrter Laufrichtung betrieben wird.

Zur weiteren Beschreibung der Turbulenzeinrichtung 26 wird außer auf Fig. 1 auch auf Fig. 2 Bezug genommen. Wie aus den Darstellungen hervorgeht, ist mittels nicht gezeigter Stützen mit gröberem Zwischenabstand über der Haube 24 eine zweite Haube 34 angebracht. Zwischen den konzentrischen, zylindrischen, sich in senkrechter Richtung erstreckenden Randflanschen der Hauben 24 und 34 ist mittels einzelner, sich radial erstreckender Streben 36 die Turbulenzeinrichtung 26 fest angebracht. Der Flüssigkeitsspiegel ist durch die Überlauföffnung 28 auf ein solches Niveau eingeregelt, daß die unterer. Kanten einer Vielzahl senkrecht angeordneter, ringförmiger, gewellter Bleche 38, welche zusammen die Turbulenzeinrichtung 26 bilden, gerade ein wenig in die Reinigungsflüssigkeit 22 eintauchen. Die untere Randkante der Haube 24 reicht, wie aus Fig. 2 ersichtlich, etwas tiefer in die Reinigungsflüssigkeit hinein. Die Bleche 38, die z. B. aus korrosionsbeständigem Stahl oder aus Kunststoff bestehen können, sind mittels senkrechter Distanz- und Befestigungsbolzen 40, von denen nur einer gezeigt ist, mit dem gewünschten gegenseitigen radialen Zwischenabstand an dem Rahmen befestigt, der durch die Hauben 24 und 34 sowie die Verbindungsstreben 36 gebildet wird. Fig. 2 zeigt weiterhin, daß das radial äußerste Blech 38 am unteren Rand weiter in die Reinigungsflüssigkeit hineinreicht als die anderen Bleche, und zwar vorzugsweise etwa ebenso weit wie die Haube 24. Es soll damit sichergestellt werden, daß das zu reinigende Gas nicht in einem Zuge unter alle Blechringen 38 hindurchströmt, sondern möglichst bereits zwischen den innersten Blechringen 38 aufsteigt und auf jeden Fall am radial äußersten Blechring 38 aufgehalten wird und aufsteigen muß.

Das radial innerste gewellte Blech 38 liegt an der Haube 24 dicht an. Die gewellte Form aller Bleche 38 stimmt überein, und die Anordnung ist so getroffen, daß die Wellen der Bleche im Zwischenraum zwischen benachbarten Blechen von oben nach unten immer abwechselnd Engstellen mit einer lichten Weite von nur wenigen Millimetern und weite Bereiche bilden, deren Durchläßquerschnitt für eine senkrechte und waagerech-

EP 0 385 983 B1

te Strömung, z. B. etwa zehn mal so grob ist wie an den Engstellen. Die Zwischenräume zwischen den Blechen haben unten und oben jeweils abwechselnd eine weite und eine enge Öffnung, wobei die Zwischenräume mit einer unteren weiten Öffnung oben eine enge Öffnung haben, und umgekehrt. Die Zwischenräume zwischen den gewellten Blechen 38 bilden senkrechte, ringförmige, konzentrische Strömungskanäle, wobei der radial innerste Strömungskanal unten eine weite Öffnung hat.

Rauchgas, das durch die Druckdifferenz zwischen der Innen- und Außenseite der Haube 24 an deren Unterkante unter die Flüssigkeitsoberfläche gedrückt wird, steigt in dem unten weit geöffneten Strömungskanal zwischen den beiden radial innersten gewellten Blechen 38 auf und gelangt, wenn es oben den Zwischenraum zwischen den gewellten Blechen verläßt, in einen freien Hohlraum 42 zwischen den beiden Hauben 24 und 34. Auch die anderen Zwischenräume zwischen den gewellten Blechen 38 münden oben in den freien Hohlraum 42. Das zwischen den gewellten Blechen 38 aufsteigende Gas nimmt Flüssigkeit mit und befeuchtet die Wände der Bleche 38. Da die Reinigungsflüssigkeit 22 schaumbildende Zusätze, z. b. Seifenlauge, enthält, füllt sich der Zwischenraum zwischen den Blechen 38 mit Schaumbläschen. Der Wechsel zwischen Engstellen und weiten Bereichen bewirkt eine turbulente Strömung und intensiven Kontakt des Rauchgases mit der groben Flüssigkeitsoberfläche an den gewellten blechen und den Schaumbläschen.

Es hat sich in Versuchen gezeigt, daß infolge des durch die Hauben 24 und 34 begrenzten Hohlraums 42, der mit allen Zwischenräumen zwischen den gewellten Blechen 38 in Verbindung steht, die Schaummassen gleichmäßig über die Fläche verteilt werden. Man erreicht einerseits längere Reaktionszeiten der im Schaum eingeschlossenen Rauchgase, andererseits ein gleichmäßiges Schaumbild mit sehr kleinen Schaumblasen, deren Oberfläche insgesamt größer ist als die Oberfläche weniger grober blasen.

Rauchgas und Schaum verlassen den Hohlraum 42, indem sie unter der untersten Kante der Haube 34 radial nach außen strömen. Diese Kante befindet sich mit Abstand über der Flüssigkeitsoberfläche, wobei der Zwischenraum zwischen der Kante und der Reinigungsflüssigkeit durch ein Gitter 44 abgedeckt ist. Das Gitter 44 mit einer Öffnungsweite der Gitteröffnungen von z. B. 8 mm trägt ebenfalls zur Vergleichmäßigung der Schaumblasen auf einen Durchmesser in der Größenordnung von etwa 1 cm bei.

Die Vergleichmäßigung des Gaseintritts in die Turbulenzeinrichtung 26 über den Umfang der Haube 24 kann dadurch gefördert werden, daß deren untere Randkante gezackt oder gezahnt wird, wie dies in Fig. 1 auf der rechten Seite angedeutet ist. Zwischen den Zähnen und generell bis etwas unterhalb der unteren, in die Reinigungsflüssigkeit eingetauchten Randkante der Haube 24, kann sich ein weiteres (nicht gezeigtes) Gitter, wie das Gitter 44, erstrecken, welches von Anfang an für noch gleichmäßigeren Gaseintritt und Schäumungsprozeß in der Turbulenzeinrichtung 26 sorgt.

Sämtliche hier für den Schaumerzeuger 12 vorgeschlagenen Maßnahmen sind unabhängig vom Vorhandensein eines Schaumzerlegers 14.

An den Schaumerzeuger 12 schließt sich im Strömungsweg des Rauchgases und des Schaums ein sich nach oben verjüngender trichterförmiger Kanal 46 an, der zur Schaumzerlegungseinrichtung 14 führt. Diese besteht aus einem Radialgebläse 48 mit Motor 50 sowie vier Prallwänden 52, 54, 56, 58. In Fig. 1 ist auf der linken Seite die äußere Randkante der im Beispielsfall konischen Prallwände weggelassen worden, um die Gasströmung besser zeigen zu können. Bei der gezeigten Ausführung beginnt die unterste Prallwand 52 radial innen im unteren Bereich des Radialgebläses und erstreckt sich dann mit vergleichsweise kleinem Spitzenwinkel unter zunehmender radialer Erweiterung nach unten. Die nächsthöhere Prallwand 54 beginnt radial innen axial etwas höher am Radialverdichter und erstreckt sich dann unter einem stumpferen Spitzenwinkel nach unten und aussen. Entsprechendes gilt für die nächsthöhere Prallwand 56. Die oberste Prallwand 58 beginnt radial innen im oberen Bereich des Radialgebläses 48 und erstreckt sich dann unter trichterförmiger Erweiterung nach oben und außen.

Der gesamte Schaumzerleger 14 sowie der trichterförmige Kanal 46 sind in einem runden Behälter 60 aufgenommen, der oben durch ein Gitter 62 abgeschlossen ist. Das Radialgebläse 48 saugt Rauchgas und Schaum vom Schaumerzeuger 12 durch den trichterförmigen Kanal 46 nach oben an. Dann schleudert der Rotor des Radialgebläses den Schaum radial nach außen. Bereits während der starken Zentrifugalbeschleunigung wird ein großer Teil der Schaumblasen zerstört. Der Rest wird gegen die Prallwände 52, 54, 56, 58 geschleudert und zerplatzt dabei. Die konische Form der Prallwände ist in diesem Zusammenhang besonders zweckmäßig, weil der Schaum unmittelbar nach dem Aufprall an der Wand entlang radial nach außen getrieben wird, wobei der letzte Rest des Schaums auch noch zerlegt wird. Während anschließend das gereinigte Gas nach oben durch das Gitter 62 entweicht, läuft die Reinigungsflüssigkeit, die bei der Zerlegung des Schaums entsteht, am Boden des Behälters 60 zusammen und gelangt von dort durch mehrere kleine Rücklauföffnungen 64 in das Becken 20 zurück. .

Obgleich der Schaumzerleger 14 die Gefahr des Überschäumens grundsätzlich beseitigt, kann auch noch sicherheitshalber das Gitter 62 als Elektrogitter ausgelegt werden, so daß zwischen parallelen Gitterdrähten ein elektrisches Potential besteht, welches Schaumblasen zum Zerplatzen bringt.

4

Als eine weitere elektrische Einrichtung zur Förderung der Reinigung von Rauchgasen mittels Schaum kann eine Elektrolyseeinrichtung eingesetzt werden, deren nicht gezeigte Elektroden in die Reinigungsflüssigkeit 22 eintauchen. Mittels der Elektroden können gelöste, in Ionenform vorliegende Verunreinigungen aus der Reinigungsflüssigkeit 22 entfernt werden. Dabei entstehen zum Teil unlösliche Verbindungen, die sich am Boden des Beckens 20 als Schlamm absetzen und in der oben beschriebenen Weise über die Vorlaufleitung 32 abgesaugt werden können.

Es sei abschließend darauf hingewiesen, daß die Prallwände 52-58 auch eine andere als die gezeigte Form haben können. Im Einzelfall kann z. B. eine einzige, das Radialgebläse 48 ringförmig umgebende, zylindrische Prallwand genügen. Eine weitere Abwandlungsmöglichkeit besteht darin, daß sowohl das Radialgebläse 48 als auch der Radialverdichter 10 von einem einzigen Antriebsmotor angetrieben werden. Bei bestimmten Anwendungsfällen kann auch der Radialverdichter 10 mit seinem Antriebsmotor 16 entfallen. Die Saugwirkung des Radialgebläses 48 wird oft genügen, das Rauchgas durch die Reinigungsflüssigkeit 22 und die Turbulenzeinrichtung 26 hindurchzusaugen.

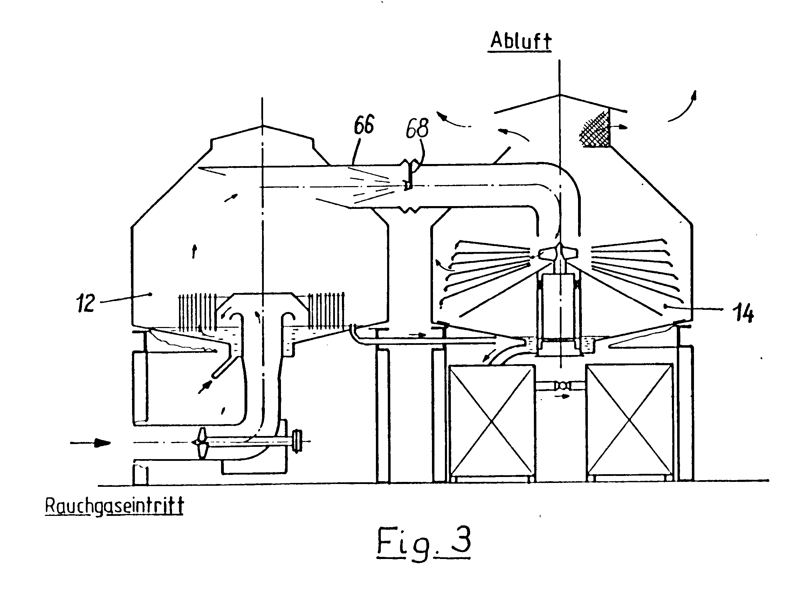

Die in Fig. 3 gezeigte Vorrichtung zur Naßreinigung von Rauchgas besteht aus dem Schaumerzeugerteil 12, dem Schaumzerlegerteil 14 sowie einer Verbindungsleitung 66, welche eine Einrichtung 68 zur Abscheidung großer Schaumblasen enthält.

Die Einrichtung 68 besteht aus einer in der Verbindungsleitung zentral angeordneten Vollkegeldüse, die entgegengesetzt zur Schaumförderrichtung über den Querschnitt der Leitung 66 sprüht.

Anstelle einer oder mehrerer Sprühdüsen können auch eine gelochte Ringleitung mit einem gegen die Schaumförderrichtung gerichteten Wirkwinkel und/oder mit einer in der durch die Ringleitung gebildeten Ebene liegenden Wirkrichtung und/oder ein mittels Flüssigkeitsdruckes angetriebenes, z. B. schräg angeströmtes Flügelrad vorgesehen sein.

## Patentansprüche

1. Vorrichtung zur Naßreinigung von durch einen Rauchgaszug abgeleitetem Rauchgas, bestehend aus einer den Rauchgaszug überdeckenden Haube und einem ihn ringförmig umgebenden, Reinigungsflüssigkeit enthaltenden Becken, wobei der Rand der Haube ringsum ein wenig unter die Oberfläche der einen Schaum bildenden Zusatz enthaltenden Reinigungsflüssigkeit reicht und als Turbulenzeinrichtung ausgebildet ist, welche das Rauchgas auf seinem Strömungsweg mehrfach unter die Oberfläche der Reinigungsflüssigkeit leitet, **dadurch gekennzeichnet**, daß im Strömungsweg des Rauchgases hinter dem Becken (20) mit Reinigungsflüssigkeit (22) eine Einrichtung (14) zur Schaumzerlegung angeordnet ist, bestehend aus einem Radialgebläse (48), welches von wenigstens einer Prallwand (52-58) umgeben ist.

2. Vorrichtung nach Anspruch 1, **dadurch gekennzeichnet,** daß das Radialgebläse (48) von einer oder mehreren übereinander angeordneten, konischen Prallwänden (52-58) umgeben ist.

3. Vorrichtung nach Anspruch 1 oder 2, **dadurch gekennzeichnet,** daß die Saugseite des Radialgebläses (48) über eine sich in Strömungsrichtung trichterförmig verengende Zuleitung (46) an das Becken (20) angeschlossen ist.

4. Vorrichtung nach einem der Ansprüche 1 bis 3, **dadurch gekennzeichnet,** daß das Radialgebläse (48) und die Prallwände (52-58) in einem Behälter (60) über dem Becken (20) angeordnet sind, welcher unten mit einem Rücklauf (64) zum Becken (20) für aus zerlegtem Schaum zurückgewonnene Reinigungsflüssigkeit versehen ist.

5. Vorrichtung nach Ansprüch 4, **dadurch gekennzeichnet,** daß der Behälter (60) oben von einem Schaumbegrenzungsgitter (62) überdeckt ist.

6. Vorrichtung nach einem der Ansprüche 1 bis 5 mit einer aus mehreren konzentrischen, senkrecht angeordneten Lamellen (38) bestehenden Turbulenzeinrichtung (26), deren Zwischenräume oben durch einen gemeinsamen Hohlraum (42) verbunden sind, **dadurch gekennzeichnet,** daß der Hohlraum (42) radial außerhalb der äußersten Lamelle unterhalb von dessen Oberkante, aber über der Oberfläche der Reinigungsflüssigkeit (22) eine Auslaßöffnung hat und die äußerste Lamelle (38) weiter unter die Oberfläche der Reinigungsflüssigkeit (22) reicht als die benachbarten inneren Lamellen (38).

7. Vorrichtung nach Anspruch 6, **dadurch gekennzeichnet,** daß die Unterkante der Haube (24) ungefähr ebenso tief unter die Oberfläche der Reinigungsflüssigkeit (22) reicht wie die Unterkante der äußersten Lamelle (38).

8. Vorrichtung nach Anspruch 6, **dadurch gekennzeichnet,** daß die Auslaßöffnung des Hohlraums (42) durch ein in die Reinigungsflüssigkeit (22) reichendes Gitter (44) abgedeckt ist.

9. Vorrichtung nach einem der Ansprüche 1 bis 8, **dadurch gekennzeichnet,** daß Elektroden einer Elektrolyseeinrichtung in die Reinigungsflüssigkeit (22) eingetaucht sind.

10. Vorrichtung nach einem der Ansprüche 1 bis 9 mit einem über eine Pumpe, eine Vorlaufleitung (32) und eine Rücklaufleitung (30) mit dem Becken (20) verbundenen Vorratsbehälter für Reinigungsflüssigkeit, welcher gleichzeitig als Absetzbehälter für Schlamm dient, **dadurch gekennzeichnet**, daß die Vorlaufleitung (32) am Boden des Beckens (20) mündet und zum Absaugen von Schlamm. aus dem Becken (20) die Pumpe in Intervallen mit entgegengesetzter Förderrichtung antreibbar ist.

11. Vorrichtung nach einem der Ansprüche 1 bis 10, **gekennzeichnet durch** die der Einrichtung (14) vorgeschaltete Einrichtung (68) zur Abscheidung mitgeführter großer Schaumblasen aus dem Schaum.

12. Vorrichtung nach Anspruch 11, **dadurch gekennzeichnet**, daß die Einrichtung (68) eine mit Reinigungsflüssigkeit betreibbare Sprühvorrichtung ist.

13. Vorrichtung nach Anspruch 11 und/oder 12, **dadurch gekennzeichnet,** daß die Einrichtung (68) dem Schaum enthaltenden Trägergasstrom entgegenwirkt.

## Claims

1. An apparatus for the wet cleaning of flue gas conducted through a gas flue, comprising a hood covering the gas flue and a reservoir annularly surrounding it and containing cleaning liquid, wherein the edge of the hood extends circumferentially slightly below the surface of the cleaning liquid containing a foam-forming additive and takes the form of a turbulence device which directs the flue gas on its flow path a number of times below the surface of the cleaning liquid, characterised in that a device (14) for breaking down foam is disposed in the flow path of the flue gas downstream of the reservoir (20) containing cleaning liquid, said device (14) comprising a radial blower (48) which is surrounded by at least one baffle (52-58).

2. An apparatus according to Claim 1, characterised in that the radial blower (48) is surrounded by one or more conical baffles (52-58) mounted one above the other.

3. An apparatus according to Claim 1 or 2 , characterised in that the intake side of the radial blower (48) is connected to the reservoir (20) via a feed duct (46) narrowing in the shape of a funnel in flow direction.

4. An apparatus according to any one of Claims 1 to 3, characterised in that the radial blower (48) and the baffles (52-58) are disposed in a container (60) above the reservoir (20), which at its bottom is provided with a return (64) into the reservoir (20) for cleaning liquid recovered from broken-down foam.

5. An apparatus according to Claim 4, characterised in that the container (60) is covered at the top by a foam-limiting grille (62).

6. An apparatus according to any one of Claims 1 to 5, having a turbulence device (26) which comprises a plurality of concentric, vertically arranged laminae (38), the spaces between which are connected at the top by a common cavity (42), characterised in that the the cavity (42) has an outlet opening radially outside the outermost lamina below its upper edge but above the surface of the cleaning liquid (22), and the outermost lamina (38) extends further below the surface of the cleaning liquid (22) than the adjacent inner laminae (38).

7. An apparatus according to Claim 6, characterised in that the lower edge of the hood (24) extends approximately as far below the surface of the cleaning liquid (22) as the lower edge of the outermost lamina (38).

8. An apparatus according to Claim 6, characterised in that the outlet opening of the cavity (42) is covered by a grille (44) extending into the cleaning liquid (22).

9. An apparatus according to any one of Claims 1 to 8, characterised in that electrodes of an electrolysis device are immersed in the cleaning liquid (22).

10. An apparatus according to any one of Claims 1 to 9, having a storage tank for cleaning liquid, which is connected to the reservoir (20) via a pump, a flow duct (32) and a return duct (30) and which serves simultaneously as a settling tank for sludge, characterised in that the flow duct (32) discharges at the bottom of the reservoir (20), and for the purpose of drawing off sludge from the reservoir (20) the pump can, at intervals, be driven in the opposite delivery direction.

11. An apparatus according to any one of Claims 1 to 10, characterised by a device (68), connected upstream of the device (14), for eliminating large entrained bubbles from the foam.

12. An apparatus according to Claim 11, characterised in that the device (68) is a spraying device which can be operated with cleaning liquid.

13. An apparatus according to Claim 11 and/or 12, characterised in that the device (68) acts counter to the carrier gas stream containing the foam.

**Revendications**

1. Dispositif pour le lavage de fumées sortant un conduit d'évacuation de fumées, comprenant un chapeau recouvrant le conduit de fumées et une cuve annulaire entourant le chapeau et contenant un liquide de lavage, le bord du chapeau passant de manière annulaire, légèrement en-dessous de la surface du liquide de lavage contenant un additif formant de la mousse, ce bord étant réalisé comme moyen engendrant des turbulences, pour diriger plusieurs fois les fumées, dans leur trajet, sous la surface du liquide de lavage, dispositif caractérisé en ce que dans le chemin de passage des fumées, derrière la cuve (20) contenant le liquide de lavage (22), il est prévu une installation (14) pour décomposer la mousse, cette installation se composant d'une machine soufflante radiale (48) entourée au moins partiellement par une paroi brise-jet (52-58).

2. Dispositif selon la revendication 1, caractérisé en ce que le machine soufflante radiale (48) est entourée par une ou plusieurs parois brise-jet (52-58), coniques, superposées.

3. Dispositif selon la revendication 1 ou 2, caractérisé en ce que le côté d'aspiration de la machine soufflante radiale (48) est relié à la cuve (20) par une conduite d'alimentation (46) allant en se rétrécissant en forme de trémie dans la direction de l'écoulement.

4. Dispositif selon l'une des revendications 1 à 3, caractérisé en ce que la machine soufflante radiale (48) et les parois brise-jet (52-58) sont placées dans un réservoir (60) au-dessus de la cuve (20), ce réservoir comportant en partie inférieure un retour (64) vers la cuve (20) pour le liquide de nettoyage récupéré par la décomposition de la mousse.

5. Dispositif selon la revendication 4, caractérisé en ce que le réservoir (60) est recouvert par une grille (62) pour limiter la mousse.

6. Dispositif selon l'une des revendications 1 à 5 comportant une installation à turbulence (26) formée de plusieurs lamelles (38) concentriques verticales, dont les intervalles sont reliés en partie haute par une cavité (42) commune, dispositif caractérisé en ce que la cavité (42) comporte un orifice de sortie, radialement à l'extérieur de la lamelle la plus à l'extérieur, en-dessous de son bord supérieur mais au dessus de la surface du liquide de lavage (22) et la lamelle (38) à la plus à l'extérieur descend plus profondément sous la surface du liquide de lavage (22) que les lamelles intérieures (38) voisines.

7. Dispositif selon la revendication 6, caractérisé en ce que le bord inférieur du chapeau (28) pénètre sensiblement aussi profondément sous la surface du liquide de lavage (22) que le bord inférieur de la lamelle (38) la plus à l'extérieur.

8. Dispositif selon la revendication 6, caractérisé en ce que l'orifice de sortie de la cavité (42) est recouvert par une grille (44) plongée dans le liquide de lavage (22).

9. Dispositif selon l'une des revendications 1 à 8, caractérisé en ce que les électrodes d'une installation d'électrolyse sont plongées dans le liquide de lavage (22).

10. Dispositif selon l'une des revendications 1 à 9 comportant un réservoir d'alimentation en liquide de lavage relié à la cuve (20) par une pompe, une conduit d'alimentation (32) et une conduite de retour (30), le réservoir d'alimentation servant en même temps de réservoir de décantation des boues, dispositif caractérisé en ce que la conduite d'alimentation (32) débouche au fond de la cuve (20) et pour aspirer les boues de la cuve (20), la pompe est entraînée à intervalles de façon à fonctionner en sens inverse.

11. Dispositif selon l'une des revendications 1 à 10, caractérisé par une installation (68) en amont de l'installation (14) pour séparer de la mousse les plus grandes bulles de mousse entraînées.

12. Dispositif selon la revendication 11, caractérisé en ce que l'installation (68) comporte un dispositif de pulvérisation fonctionnant avec le liquide de lavage.

13. Dispositif selon la revendication 11 et/ou 12, caractérisé en ce que l'installation (68) agit dans le sens contraire du flux de gaz vecteur contenant la mousse.

Fig_1

Fig_2

Fig. 3